Europäisches Patentamt

European Patent Office

Office européen des brevets

(11) Publication number: **0 381 443**
**A2**

# EUROPEAN PATENT APPLICATION

(21) Application number: **90300950.4**

(51) Int. Cl.5: **G11B 7/09**

(22) Date of filing: **30.01.90**

(30) Priority: **31.01.89 JP 21071/89**

(43) Date of publication of application:
**08.08.90 Bulletin 90/32**

(84) Designated Contracting States:
**DE FR NL**

(71) Applicant: **KABUSHIKI KAISHA TOSHIBA**
**72, Horikawa-Cho Saiwai-ku**
**Kawasaki-shi Kanagawa-ken(JP)**

(72) Inventor: **Ando, Hideo, c/o Intellectual**
**Property Division**
**Toshiba Corp., 1-1, Shibaura 1-chome,**
**Minato-ku**
**Tokyo 105(JP)**

(74) Representative: **Kirk, Geoffrey Thomas et al**
**BATCHELLOR, KIRK & CO. 2 Pear Tree Court**
**Farringdon Road**
**London EC1R 0DS(GB)**

(54) **Focus detection apparatus.**

(57) A focus detection apparatus having a light source (2) for generating a light beam which includes a plurality of light rays, a focus lens (10) for applying the light beam on an information recording medium, a photo detector (16) for detecting a pattern of the light beam on the information recording medium, a converging lens (10) for converging the light beam passing through the information recording medium on the photo detector (16) and an optical device (14, 40, 48) for deviating focuses of the light rays of the converged light beam with each other.

Fig. 1

# FOCUS DETECTION APPARATUS

The present invention relates generally to a focus detection apparatus, and more particularly to a focus detection apparatus which can be applied to an optical information reproducing apparatus.

Recently, optical discs have been used in many fields as information recording media. The advances in laser oscillator technology have contributed to optical discs having superior high density and high speed characteristics. Information is recorded on these discs in the form of a series of pits and the change in reflectivity of light irradiated onto the optical disc is used in order to read the recorded information.

When executing the recording and reading of information on the optical disc, a focus servo is required for the control of the irradiated light so that it can be accurately focussed on the optical disc. For instance, various methods such as a knife-edge method or an astigmatism method have been devised for detecting focus in order to operate this focus servo.

Further, a focus detecting method has already been proposed as one type of the knife-edge method. In this method, a light beam passing through an optical disc is split into two, and each of these split light beams is led to a photo detector. Thus, two beam spots are formed on the photo detector. The sizes of the beam spots vary depending on the focussing condition of the light beam to the optical disc. In this focus detection method, following optical device is alternatively used for splitting the light beams:

a: Two mirrors which have a level therebetween and are located in the path of a light beam, so that their edges aline the center axis, i.e., the light axis of the light beam;

b: A triangular prism which is located in the path of a light beam so that its one edge alines the light axis of the light beam; and

c: Two wedge-shape prisms which are located in the path of a light beam in symmetrical with the light axis of the light beam so that their edges join in the light axis of the light beam.

These beam splitting devices are required to be located with a high degree of accuracy both for their positions in the path of the light beam and their angles to the light axis of the light beam. When there occurs a relatively small angular and/or positional error, the light beams split by these beams splitting devices are deviated from their accurate positions on a photo detector.

Further, there is a problem that a focus detection property of focus detection appartus varies widely in manufactured apparatus. This is because it is difficult to uniformly assemble the beam splitting devices in each manufactured apparatus. Further, the manufacturing process requires a lot of time and the productivity of the apparatus is poor due to the difficulty of assembling the beam splitting devices in the apparatus.

In particular, in the apparatus using two mirrors and two wedge-shape prisms, slight inclination or positional deviation of the mirrors or the prisms occur in response to their thermal expansion due to the environmental temperature change. In such cases, the relative positions of the light beam spots formed on the photo detectors change, and thus there is a risk of change in the focus detection properties.

It is, therefore, an object of the present invention to provide a focus detection apparatus capable of accurate focal point detection without being affected by light axis divergency and the like due to temperature changes.

Another object of the present invention is to provide a focus detection apparatus which is simple in construction and is easy to assemble or manufacture.

Further object of the present invention is to provide a focus detection apparatus which can attain a high uniformity of focus detection property in manufactured products of the apparatus.

In order to achieve the above object, a focus detection apparatus according to one aspect of the present invention comprises means for generating a light beam, the light beam including a plurality of light rays, means for applying the light beam on an information recording medium, means for detecting a pattern of the light beam on the information recording medium, means for converging the light beam passing through the information recording medium on the light pattern detecting means, characterised in that the apparatus further comprises means for deviating focuses of the light rays of the converged light beam with each other.

In order that the invention may be more readily understood, it will now be described, by way of example only, with reference to the accompanying drawings, in which:-

Figure 1 is a schematic block diagram showing the focus detection apparatus of an embodiment of this invention;

Figures 2A and 2B are plan view and side elevation showing the light ray tracks in the prism type optical component shown in Figure 1;

Figures 3A, 3B and 3C are plans showing the light beam-spot patterns produced on the detecting surface of the photo detector shown in FIGURE 1 when in the focussed condition and non-focussed conditions respectively;

FIGURE 4 is a block diagram showing an example of a circuit for the signal processing circuit shown in FIGURE 1;

FIGURES 5A, 5B 5C and 5D are a side elevation and plans showing a parallel plate as the component which imparts optical path difference to the respective light rays for focus detection and the light ray tracks passing through this;

FIGURE 6 is a plan showing the light-shielding plate incorporated in an optical system which is a modified embodiment of this invention;

FIGURES 7A and 7B are plans showing the light beam-spot patterns formed on the surface of the photo-detector surface in an optical system in which the light-shielding plate shown in FIGURE 6 is not incorporated, and in an optical system in which the light-shielding plate is incorporated, respectively;

FIGURES 8A, 8B and 8C are plans showing the light beamspot patterns produced on the detecting surface of the photodetector in an optical system in which the light-shielding plate shown in FIGURE 6 is incorporated, when in the focussed condition and the non-focussed conditions respectively; and

FIGURES 9 to 13 show the respective block diagrams showing the optical systems concerned in modified embodiments of this invention.

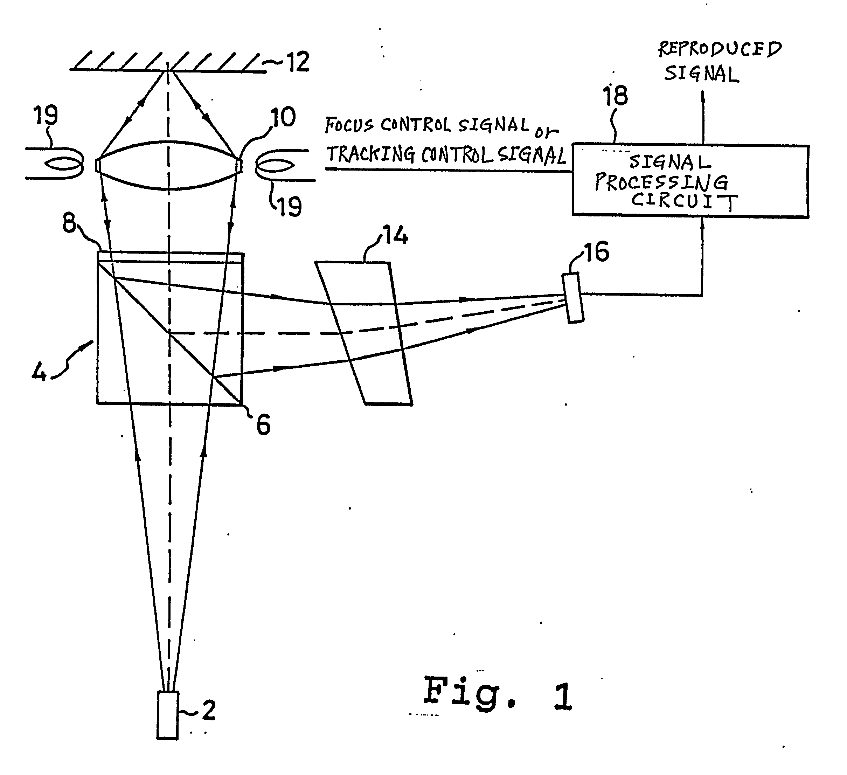

The present invention will be described in detail with reference to the FIGURES 1 through 13. Throughout drawings, like or equivalent reference numerals or letters will be used to designate like or equivalent devices for simplicity of explanation.

Referring now to FIGURE 1, a first embodiment of the focus detection apparatus according to the present invention will be described in detail.

In FIGURE 1, the focus detection apparatus comprises a light source 2 such as a semiconductor laser, a beam splitter 4, an objective lens 10 which converges the light beam onto an optical information record medium, for example, an optical disc 12, a beam pattern changing device, for example, a wedge-shape prism 14, a photo detector 16 which detects the light reflected from the optical disc 12, a signal processing circuit 18 responsive to a detection signal of the photo detector 16 and an objective lens driver, for example, a focusing actuator coil 19.

The light beam output from the light source 2 is directed onto the beam splitter 4. The light beam is incident upon the object lens 10 via a polarizing section 6 and a λ/4-plate 8 of the beam splitter 4. The objective lens 10 converges the light beam onto an information carrying surface of the optical disc 12. The optical disc 12 reflects the converged light beam. Thus, the reflected light beam is returned to the objective lens 10. The objective lens 10 again converges and applies the reflected light beam to the beam splitter 4.

When the object lens 10 is placed in a focus condition in reference to the optical disc 12, the beam waist of the converging light beam is projected onto the information carrying surface of the optical disc 12, and a minimum beam spot is formed on the information carrying surface of the optical disc 12. In the condition in which the objective lens 10 is slightly closer to the optical disc 12 along the light axis than when in the focussed condition or is slightly farther from the optical disc 12 in an out-of-focus condition, the beam waist of the converging light beam does not meet with the information carrying surface of the optical disc 12. Thus, a larger spot than the minimum beam spot is formed on the information carrying surface of the optical disc 12.

The diverging light beam returned from the optical disc 12 is converted to a converging light beam by the objective lens 10, and is returned once again to the polarizing section 6 of the beam splitter 4 via the λ/4-plate 8. The polarization plane of the light beam is rotated by the reciprocation of the light beam at the λ/4-plate 8. Therefore, the light beam returned to the polarizing section 6 of the beam splitter 4 is reflected by the polarizing section 6, and is then directed toward the wedge-shape prism 14. The light passes through the wedge-shape prism 14 and is incident upon the photo detector 16.

The photo detector 16 has multiple detecting areas, as explained later. Detection signals generated from these detecting areas are processed by the signal processing circuit 18 so that a focus control signal and a tracking control signal are obtained. The focus actuator coil 19 is driven in response to the focus control signal, and thus the objective lens 10, or the whole optical system, is driven along the light axis. In this way, the objective lens 10 is maintained in the focussed condition. The objective lens 10, or the whole optical system, is driven in the direction across the track of the optical disc 12 in response to the tracking control signal. Thus, the converged light beam through the objective lens 10 follows the information carrying track.

While the objective lens 10 is maintained in the focussed condition and the on-track condition, the detection signals generated from the detecting areas of detector 16 are processed by the signal processing circuit 18 and are converted to reproduced signals which correspond to the information recorded on the optical disc 12. The reproduced signals generated by the signal processing circuit 18 are displayed on an external display device (not illustrated) as a reproduced information.

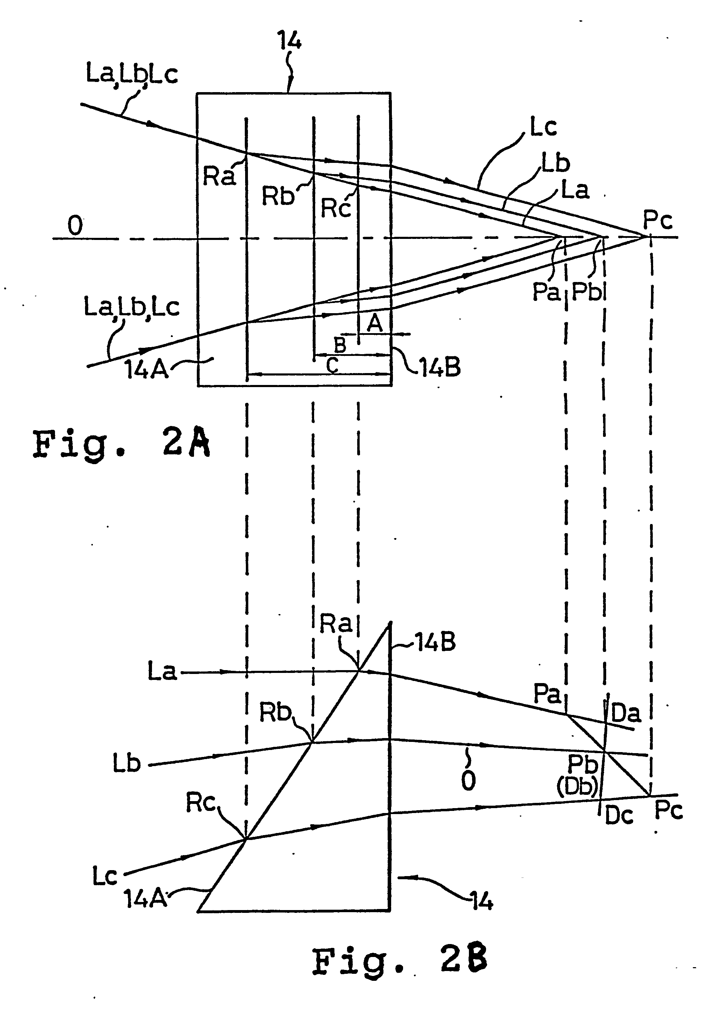

As described above, the converging beam is incident upon the wedge-shape prism 14 as the beam pattern changing device shown in FIGURE 1. As shown in FIGURES 2A and 2B, this converging light beam is refracted by the wedge-shape prism 14 and is converged towards a focal line determined by focal points Pa, Pb and Pc. Thus, as shown in FIGURE 2B which shows a side elevation of the wedge-shape prism 14, light rays La, Lb and Lc on different planes in the converging light beam are each incident at different incidence portions Ra, Rb and Rc on the front surface 14A of the wedge-shape prism 14. They pass through the wedge-shape prism 14, and are outputted from the rear surface 14B.

As is clear from FIGURE 2B, the light rays La, Lb and Lc are incident at different incidence portions Ra, Rb and Rc on the front surface 14A of the wedge-shape prism 14. For this reasons in the wedge-shape prism 14, as shown in FIGURE 2A, the light rays La, Lb and Lc pass through the incidence portions with different thicknesses A, B, C of the wedge-shape prism 14. Thus, the light rays La, Lb and Lc converge at different focal points Pa, Pb and Pc. This means that, as shown in plan form in FIGURE 2A, the light rays La, Lb and Lc incident upon the front surface 14A with equal incidence angles will be incident upon the front surface 14A at the different incidence portions Ra, Rb and Rc along the light axis 0. For this reason, when the light beam is refracted at the front surface 14A, the light rays La, Lb and Lc which pass along optical paths which also differ plane-wise. Therefore, the light rays La, Lb and Lc which appear from the rear surface 14B are focussed at different focal points Pa, Pb and Pc.

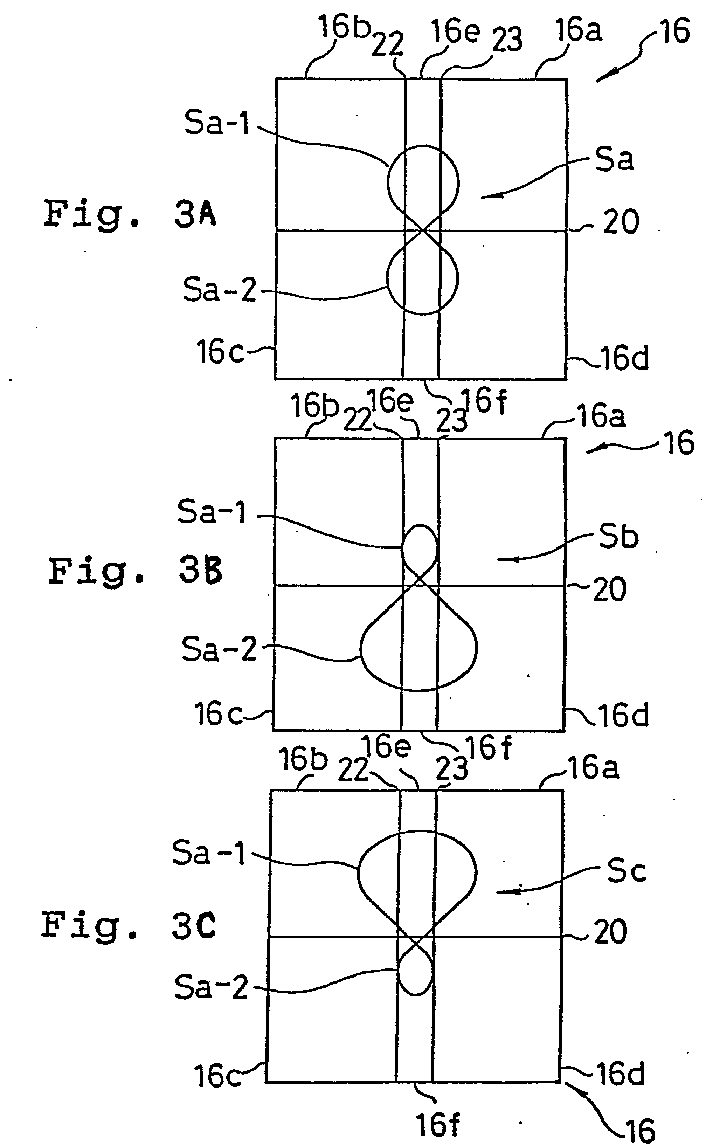

As described with reference to FIGURES 2A and 2B, aberration which is close to comatic aberration is imparted to the converging light beam by the wedge-shape prism 14. Therefore, in the case when the detecting surface of the photo detector 16 is located in a plane which is determined by points Da, Db and Dc being approximately perpendicular to the light axis 0 as shown in FIGURE 2B, light beam spots Sa, Sb and Sc shown in FIGURES 3A, 3B and 3C are formed on the detecting surface of the photo detector 16. Thus, the beam pattern of the light beam is changed by the wedge shape prism 14.

The photo detecting surface of the photo detector 16 is divided into six detecting zones 16a to 16f by three dividing lines 20, 22 and 23, as shown in FIGURES 3A to 3C. So that it has the detecting zones 16a - 16d with mutually equal areas and the detecting zones 16e and 16f with zones equal to each other. In the location of this type of the photo detector 16, when the objective lens 10 is in the focussed condition, the center of the detecting surface of the photo detector 16 agrees with the focal point Pb, and the focal point Pa is formed slightly in front of the detecting surface of the photo detector 16 while the focal point Pc is formed slightly behind the detecting surface of the photo detector 16. In this case, a dot-shaped spot is formed which corresponds to the focal point Pb in the center of the detecting surface of the photo detector 16.

The diverging light beam from the focal point Pa is incident upon the upper zones 16a, 16b and 16e of the detecting surface of the photo detector 16, and therefore a beam-segment spot Sa-1 is formed on them. Also, the light beam which is converging towards the focal point Pc is incident upon the lower zones 16c, 16d and 16f of the photo detector 16, and thus beam segment spot Sa-2 is formed on them. Therefore, the beam spot Sa which has an overall 8-letter shaped pattern is formed on the photo detector 16.

On the other hand, when the objective lens 10 is in the out-of-focus condition in which it is closer to the optical disc 12, since the convergence of the light beam from the objective lens 10 is weaker, the focal point Pa is closer to the photo detector 16, the focal point Pb is shifted behind the detecting surface of the photo detector 16, and the focal point Pc is farther away from the detecting surface of the photo detector 16. Therefore, as shown in FIGURE 3B, beam-segment spot Sb-1 formed on the upper zones 16a, 16b, and 16e of the photo detector 16 is smaller than beam-segment spot Sa-1 when in the focussed condition. Also, beam-segment spot Sb-2 formed on the lower zones 16c, 16d and 16f of the photo detector 16 is larger than beam-segment spot Sa-2 when in the focussed condition.

Moreover, when the objective lens 10 is in the out-of-focus condition in which it is farther from the optical disc 12, since the convergence of the light beam from the objective lens 10 is stronger, the focal point Pa is farther from the detecting surface of the photo detector 16, the focal point Pb is shifted in front of the detecting surface of the photo detector 16, and the focal point Pc is closer to detecting surface of the photo detector 16. Therefore, as shown in FIGURE 3C, a beam-segment spot Sc-1 formed on the upper detecting zones 16a, 16b and 16e of the photo detector 16 is larger than the beam-segment spot Sa-1 when in the focussed condition. Also, a beam-segment spot Sc-2 formed on the lower detecting zone 16c, 16d and 16f of photo detector 16 is smaller than the beam-segment spot Sa-2 when in the focussed condition.

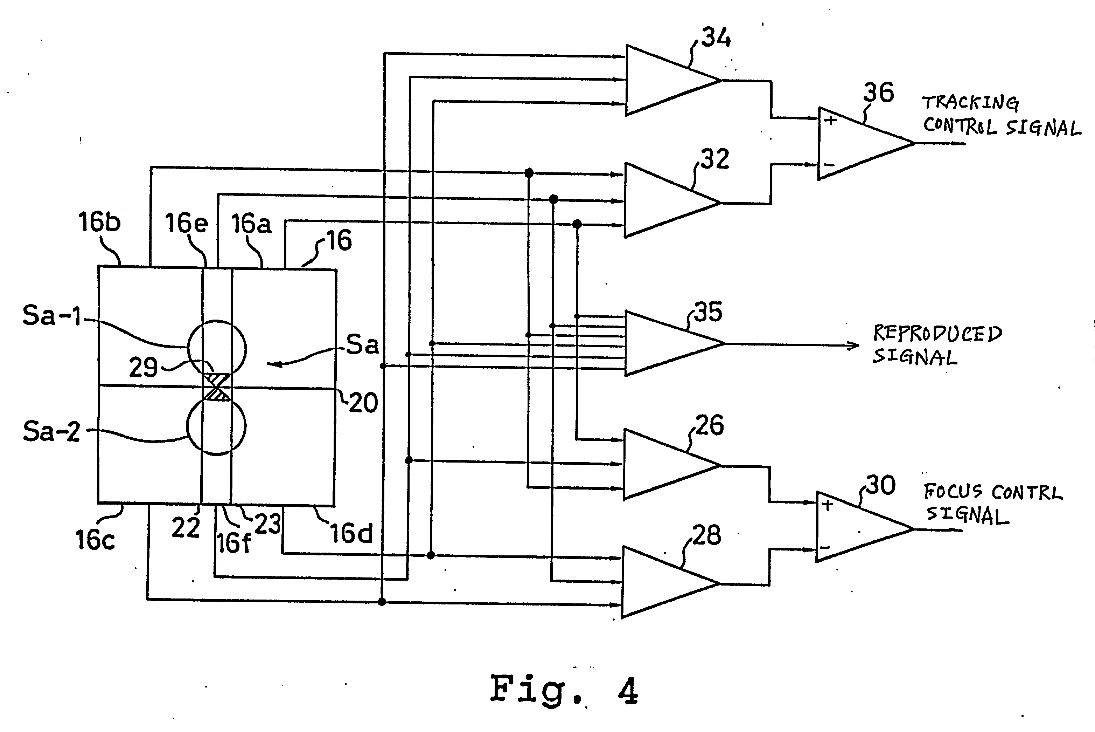

As shown in FIGURE 4, the detecting zones 16a, 16b and 16f of the photo detector 16 are connected to a first adder 26, and the detection signals from the detecting zones 16a, 16b and 16f are added by the first adder 26. Also, the detecting zones 16c 16d and 16e of the photo detector 16 are connected to a second adder 28, and the detection signals from the detecting zones 16c, 16d and 16e are added by the second adder 28. The added signals from the first and second adders 26 and 28 are input to a differential amplifier 30 and a difference thereof is amplified and generated as a focus control signal.

As is clear from the description of FIGURE 3A, when in focus, the detection signals from the detecting zones 16a, 16b 16c and 16d are equal to each other and the detection signals from the detecting zones 16e and 16f are also equal to each other. Therefore, when in focus, a zero-level focus control signal signifying the focussed condition is generated from the differential amplifier 30. On the other hand, when the objective lens 10 is in the out-of-focus condition in which it is closer to the optical disc 12, the first sum signal added by the first adder 26 from the detection signals of the detecting zones 16a, 16b and 16f is smaller than the second sum signal added by the second adder 28 from the detection signals of the detecting zones 16c, 16d and 16e. For instance, a plus-level focus control signal is generated by the differential amplifier 30. Also, when the objective lens 10 is in the out-of-focus condition in which it is farther from the optical disc 12, the first sum signal added by the first adder 26 from the detection signals of the detecting zones 16a, 16b and 16f is larger than the second sum signal added by the second adder 28 from the detection signals of the detecting zones 16c, 16d and 16e, and, for instance, a minus-level focus control signal is generated by the differential amplifier 30.

As shown in FIGURE 4, a diffraction pattern 29 is produced as a dark portion in beam spot Sa formed on the detecting surface of the photo detector 16 through the diffraction of the light beam by the track of the optical disc 12. In order to detect the diffraction pattern 29, as shown in FIGURE 4, the detecting zones 16a, 16b and 16e of the photo detector 16 are connected to a third adder 32, and the detection signals from the detecting zones 16a, 16b and 16e are added by the third adder 32. Also, the detecting zones 16c, 16d and 16f of the photo detector 16 are connected to a fourth adder 34, and the detection signals from the detecting zones 16c, 16d and 16f are added by the fourth adder 34.

The third and fourth added signals from the third and fourth adders 32 and 34 are input to a differential amplifier 36 and their difference is amplified and generated as a tracking control signal. In the on-track condition in which the track of the optical disc 12 is being accurately followed by the light beam, the diffraction pattern is produced symmetrically about the dividing line 20 as shown in FIGURE 4. Therefore, the third and fourth added signals with equal levels are generated from the third and fourth adders 32 and 34, and a zero-level tracking control signal is generated from the differential amplifier 36.

On the other hand, in the off-track condition in which the light beam has shifted slightly from the center of the track of the optical disc 12, the diffraction pattern 29 in the light beam spot Sa is slightly shifted towards either the detecting zones 16a, 16b and 16e side or the detecting zones 16c, 16d and 16f side. Therefore, the different level third and fourth added signals are generated from the third and fourth adders 32 and 34, and a plus-level or a minus-level tracking control signal is generated from the differential amplifier 36.

As shown In FIGURE 4, the detecting zones 16a, 16b, 16c, 16d, 16e and 16f are connected to a fifth adder 35. The light beam focussed on the optical disc 12 is modulated in strength by the information recorded on the track of the optical disc 12, for instance information as pits. Therefore, a light beam which is strength-modulated in response to the recorded information is incident upon the photo detector 16. A reproduced signal is generated by adder 35 through the addition of the detection signals from the detecting zones 16a - 16f of the photo detector 16.

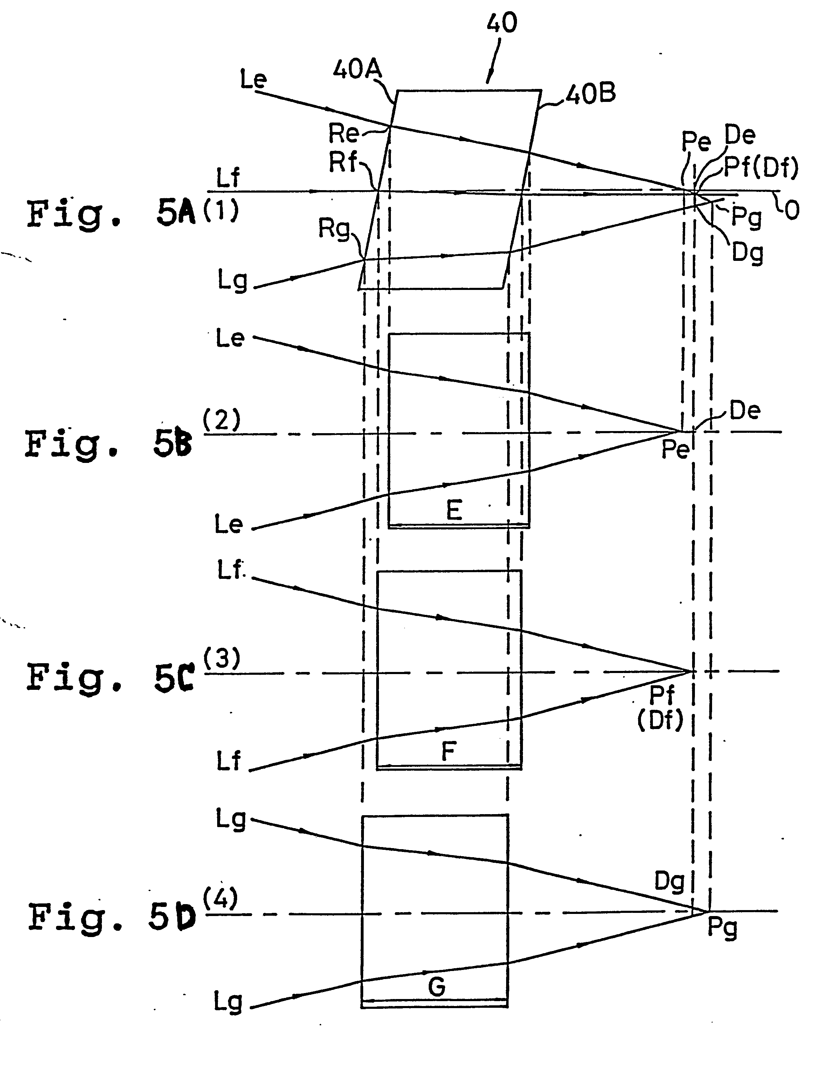

In FIGURE 5A, a transparent plate 40 with a uniform thickness is used as the beam pattern changing device instead of the wedge-shape prism 14. The transparent plate 40 is located at an inclination to the light axis 0. When a converging light beam is incident upon the transparent plate 40, the light beam is converged towards the focal line determined by the different focal points Pe, Pf and Pg. Thus, as shown in FIGURE 5A which shows a side elevation of the transparent plate 40, light rays Le, Lf and Lg which compose the converging light beam are respectively incident at different incidence portions Re, Rf and Rg on the front surface 40A of the transparent plate 40, and are refracted. They then pass through the transparent plate 40 and are outputted from the rear surface 40B of the transparent plate 40.

As is clear from FIGURE 5B, the light rays Le, Lf and Lg are incident at different incidence portions Re, Rf and Rg on the front surface 40A. This means that, within the transparent plate 40, they pass along optical paths with physical lengths E, F and G, that is to say, optical paths having different lengths, as shown in FIGURE 5B, 5C and 5D, and reach the rear surface 40B. Therefore, the light rays Le, Lf and Lg which appear from the rear surface 40B are focussed at the different focal points Pe, Pf and Pg. Here, in the case when the detecting surface of the photo detector 16 is located in a plane which is determined by points De, Df and Dg being approximately perpendicular to the light axis 0, as described with reference to FIGURES 3A, 3B and 3C, beam spots Sa, Sb and Sc will be formed on the detecting surface of the photo detector 16. Therefore, focus can be detected by the pattern changes of the beam spots Sa, Sb and Sc.

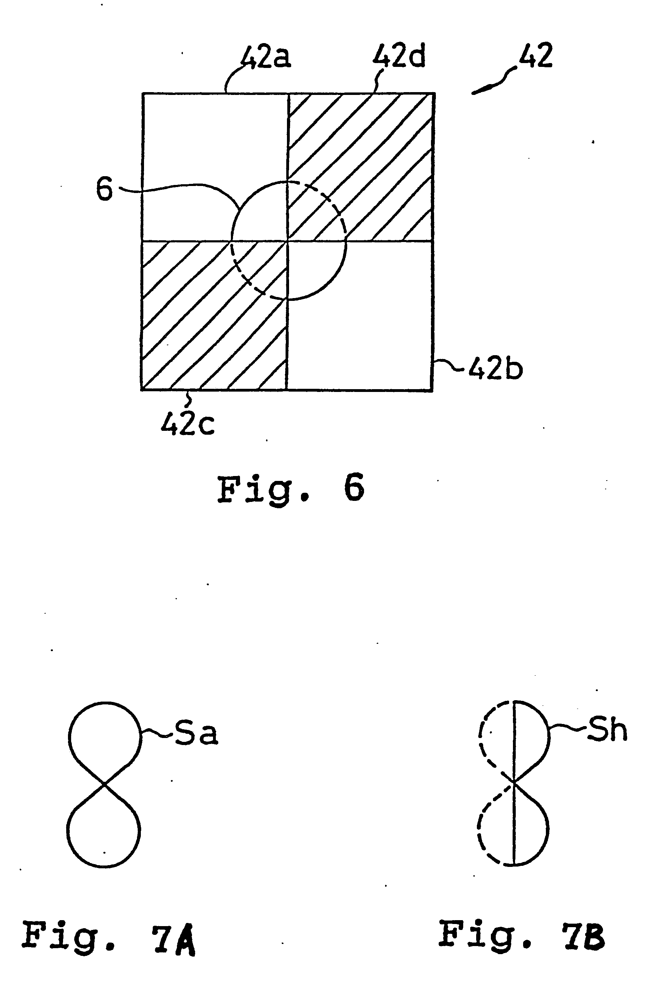

As other methods of focus detection which use the beam pattern changing device according to the present invention, focus detection apparatus may be constructed by locating light pattern reshaping mask 42, such as shown in FIGURE 6, in the optical path of the prism type optical component 14 shown in FIGURE 1. The center of the light pattern reshaping mask 42 is located on the light axis and intersects the light axis. The light pattern reshaping mask 42 is divided by dividing lines which pass through its center and are perpendicular to each other into respective pairs of light-transmitting sections 42a and 42b and light-shielding sections 42c and 42d. Their respective pairs of light-transmitting sections 42a and 42b and light-shielding sections 42c and 42 d are each located in the directions of interior opposite angles. By locating the light pattern reshaping mask 42 in the optical path, figure-of-eight beam -spot pattern Sa shown in FIGURE 7A, which occurs when in focus, is changed to the vertically cut-away figure-of-eight beam-spot pattern Sh shown in FIGURE 7B.

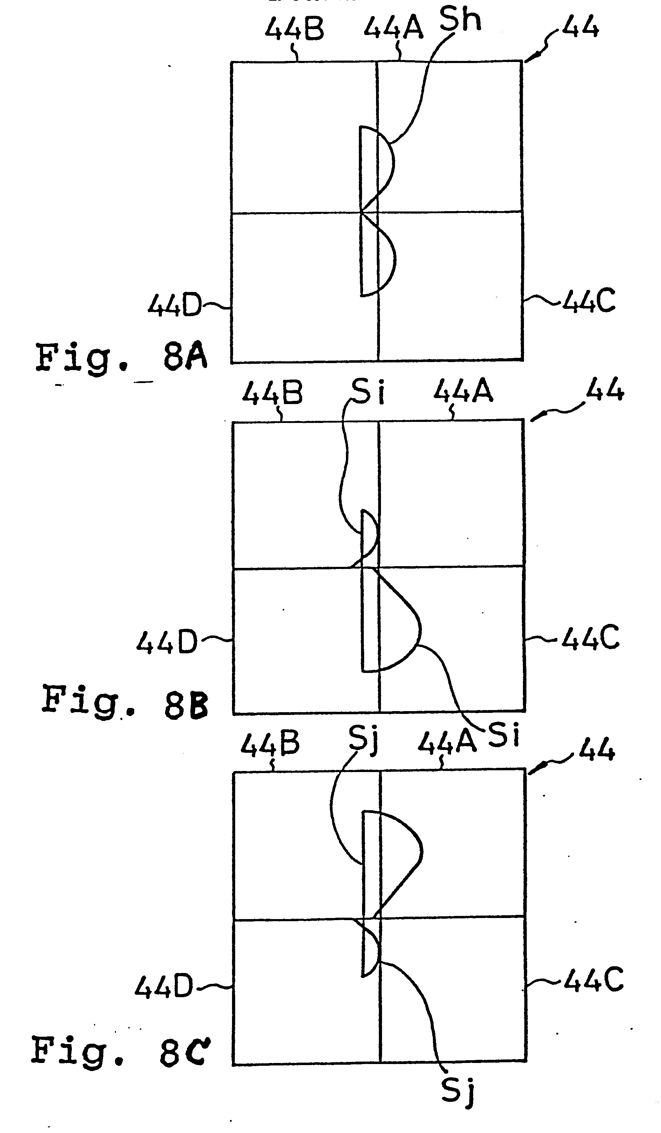

The changes in beam-spot pattern Sh in response to the state of focus are detected by photo detector 44, which is divided into 4 light-the detecting zones 44A, 44B, 44c and 44D by dividing lines which are orthogonal to each other, as shown in FIGURES 8A, 8B and 8C. When the objective lens 10 is in the focussed condition, as shown in FIGURE 8A, beam-spot pattern Sh shown in FIGURE 7B produced on the detecting surface of the photo detector 44. Detection signals are generated from the detecting zones 44A, 44B, 44C, and 44D in such a way that the first added signal, which is the addition of the detection signals from the detecting zones 44A and 44D located in the direction of interior opposite angles, is equal to the second added signal, which is the addition of the detection signals from the detecting zones 44B and 44C.

Therefore, a zero-level focus signal is generated from the differential amplifier which outputs the difference between the first and second added signals. As opposed to this, when the objective lens 10 is in the out-of-focus condition closer to the optical disc 12, as shown in FIGURE 8B, a beam-spot pattern Si is produced on the photo detector 44. The first added signal, which is the addition of the detection signals from the detecting zones 44A and 44D is smaller than the second added signal, which is the addition of the detection signals from the detecting zones 44B and 44C. Therefore, for example, a plus-level signal is generated from the differential amplifier which outputs the difference between the first and second added signals.

Also, when the objective lens 10 is in the out-of-focus condition farther away from the optical disc 12, as shown in FIGURE 8C, a beam-spot pattern Sj is produced on the photo detector 44. The first added signal, which is the addition of the detection signals from the detecting zones 44A and 44D is larger than the second added signal, which is the addition of the detection signals from the detecting zones 44B and 44C. Therefore, for example, a minus-level signal is generated from the differential amplifier which outputs the difference between the first and second added signals.

Concerning the light pattern reshaping mask 42 shown in FIGURE 6, light-transmitting zones 42a and 42d may be made equivalent to zones of the polarizing section 6 of the beam splitter 4 in the optical system in FIGURE 1, and light-shielding zones 42b and 42c may be made equivalent to zones in which the polarizing section 6 of the beam splitter 4 is not formed. By the formation of the polarizing section 6 in this way, the light beam from the semiconductor laser 2 passes through the beam splitter 4 and is focussed on the optical disc 12 by the objective lens 10 as it stands.

On the other hand, when the light beam from the optical disc 12 is reflected by the polarizing section 6, only the part of the light beam in the zones of the polarizing section 6 equivalent to light-transmitting sections 42a and 42d is reflected, and the remaining part of the light beam passes through the zones in which the polarizing section 6 is not formed equivalent to light-shielding zones 42b and 42c. By this means, the same function as the light pattern reshaping mask 42 may be imparted to the polarizing section 6 of polarising beam splitter.4

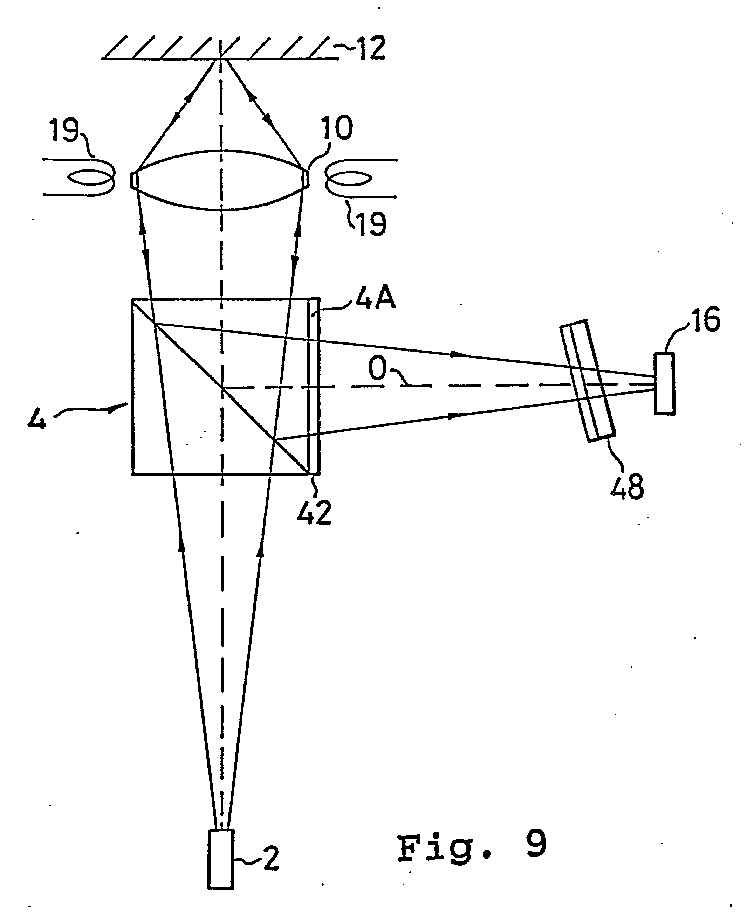

In the optical system shown in FIGURE 9, a cylindrical lens 48 is located at an inclination to light axis 0 in the path of the light reflected from the polarizing section 6 instead of the wedge-shape prism 14 shown in FIGURE 1. The light pattern reshaping mask 42 as shown in FIGURE 6 is provided on a light output plane 4A of the beam splitter 4.

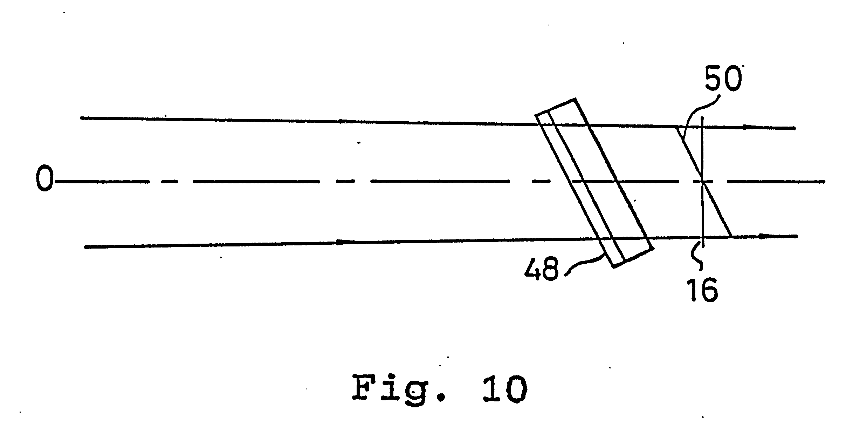

In this optical system, part of the light beam reflected from the polarizing section 6 is extracted by the light pattern reshaping mask 42 and is converged on the photo detector 16 by the cylindrical lens 48. In this optical system, the light beam outputted from the cylindrical lens 48 in the same way as the transparent plate 40 described with reference to FIGURES 5A to 5D is converged on the focal line 50, as shown in FIGURE 10. For this reason, focus can be detected in the same way by locating the photo detector 16 in a position in which it intersects focal line 50 and is perpendicular to the light axis 0.

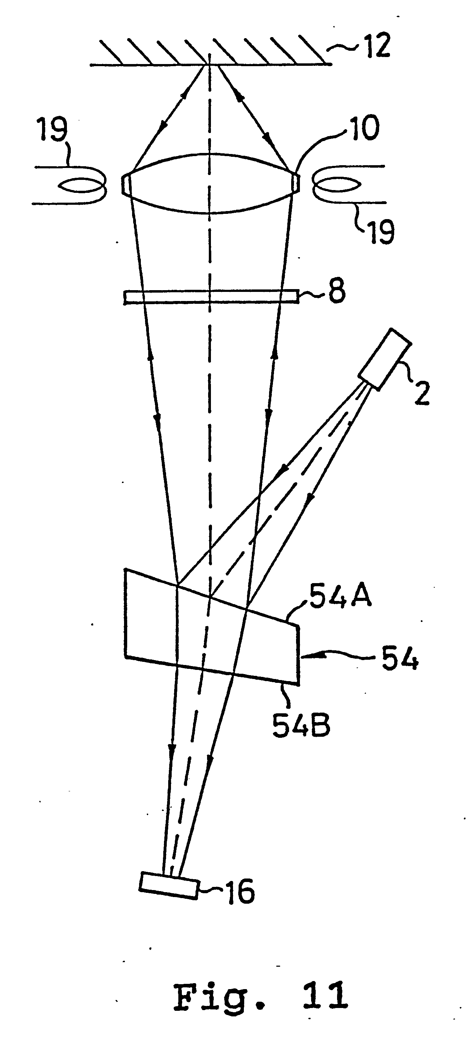

In the optical system shown in FIGURE 11, a prism type beam splitter 54 in which one of the surfaces 54A is formed as polarizing section and the light pattern reshaping mask 42, such as shown in FIGURE 6, is formed on the other surface 54B, is located between the photo detector 16 and the objective lens 10. In this optical system, the light beam from the semiconductor laser 2 is directed toward the objective lens 10 by being reflected by the polarizing section 54A of the prism type beam splitter 54. The converging light beam which is reflected from the optical disc 12 and converged by the objective lens 10 passes through the polarizing section 54A of the prism type beam splitter 54, and a part is extracted by the light pattern reshaping mask 42 of the prism type beam splitter 54 and directed toward the photo detector 16. Focus can be accurately detected in the same way in this optical system too.

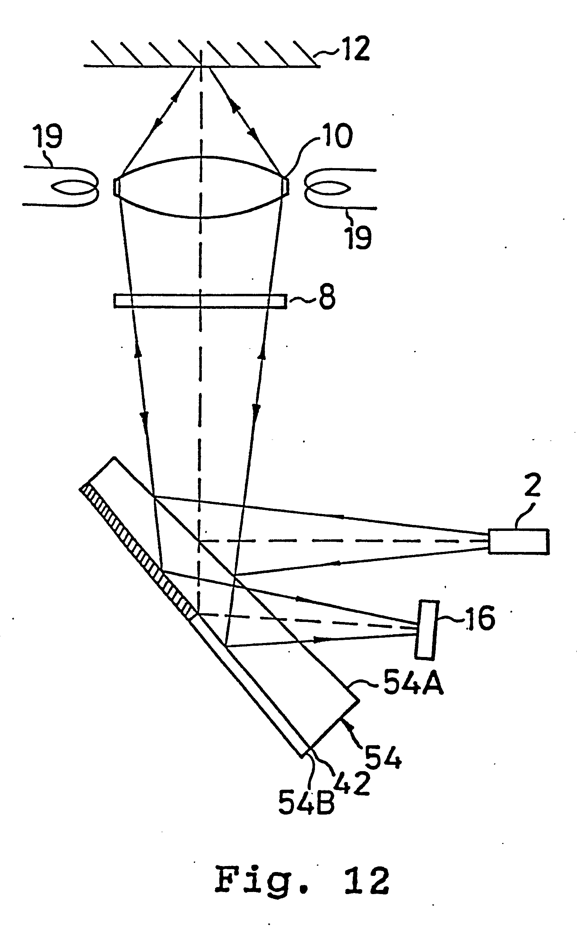

In the optical system shown in FIGURE 12, one surface 54A of the prism type beam splitter 54 is formed as a polarization plane and a light pattern reshaping mask which has the same pattern as the light pattern reshaping mask 42 shown in FIGURE 6, is formed by coating on the other surface 54B. Thus, coating layers are formed in the zones equivalent to light-transmitting sections 42a and 42b shown in FIGURE 6, thus forming an optical information carrying surface, and sections equivalent to light shielding sections 42c and 42d are determined as light-transmitting sections.

In this optical system, the light beam from the semiconductor laser 2 is directed toward the objective lens 10 by being reflected by the polarizing section 54A of the prism type beam splitter 54. The converging light beam which is reflected from the optical disc 12 and converged by the objective lens 10 passes through the polarizing section 54A of the prism type beam splitter 54, and a part is directed toward the photo detector 16 by being reflected by the light pattern reshaping mask 42. The remaining part passes through the other surface 54B. Focus can be accurately detected in the same way in this optical system too.

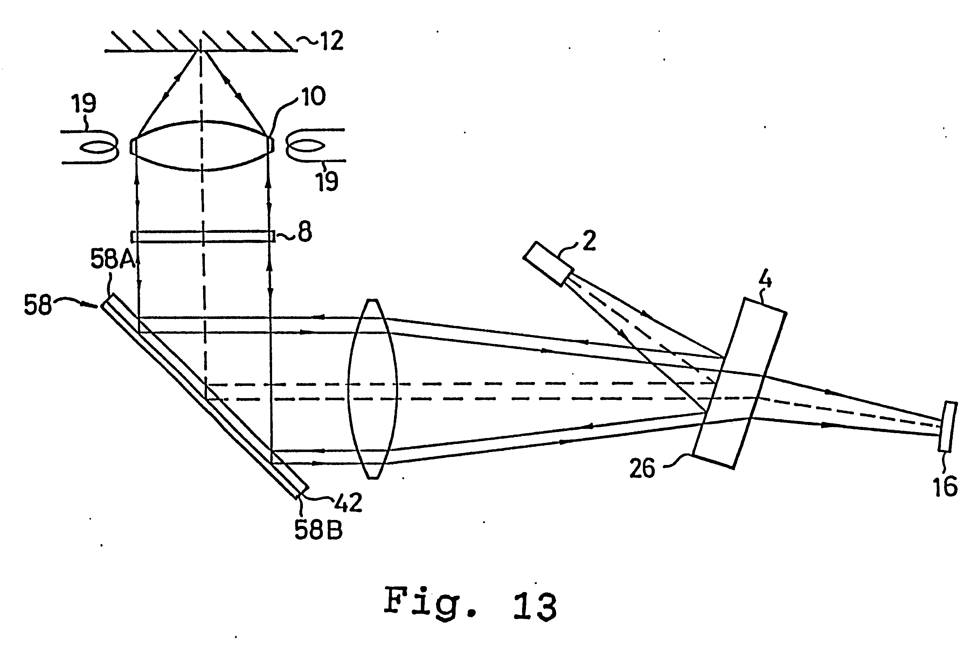

In the optical system shown in FIGURE 13, an optical member 58, of which one surface 58A is formed as a polarization plane and with a light-reflecting film which has the same pattern as the light pattern reshaping mask 42 shown in FIGURE 6 formed on the other surface 58B, is located between the photo detector 16 and the objective lens 10. In this optical system, the light beam from the semiconductor laser 2 is directed toward the objective lens 10 by being reflected by a polarizing section 58A of the optical member 58. The converging light beam which is reflected from the optical disc 12 and converged by the objective lens 10 passes through the polarizing section 58A of the optical member 58, and a part is extracted by the light-reflecting film of the optical member 58 and directed toward the photo detector 16. Focus can be accurately detected in the same way in this optical system too.

In the embodiments described above, embodiments have been described in which converging light is incident upon an beam pattern changing device which imparts aberration close to comatic aberration. However, not only converging light, but also diverging light may be incident upon this beam pattern changing device. In this type of modification, if diverging light outputted from the beam pattern changing device is converged by a converging lens at a later stage, a converging light beam will be incident upon the photo detector in the same way as described above. The beam pattern changing device which imparts aberration close to comatic aberration to the light beam is not limited to the prisms, parallel plates and cylindrical lenses described above. The beam pattern changing devices in which refractivity differs according to the light-transmitting sections, or self-focussing lenses, or again, rod lenses may also be used. These beam pattern changing devices can be produced by the techniques which change the refractivity in the light-conducting path which are used when producing light IC.

When this invention is applied, since the beam pattern changing device which imparts aberration close to comatic aberration to the light beam has a simple shape, assembly and adjustment of the optical system is simple and, furthermore, accurate and stable focus detection can be performed.

As described above, the present invention can provide an extremely preferable focus detection apparatus.

## Claims

1. A focus detection apparatus comprising means (2) for generating a light beam, the light beam including a plurality of light rays, means (10) for applying the light beam on an information recording medium, means (16) for detecting a pattern of the light beam on the information recording medium, means (10) for converging the light beam passing through the information recording medium on the light pattern detecting means (16), characterised in that the apparatus further comprises means (14, 40, 48) for deviating focuses of the light rays of the converged light beam with each other.

2. A focus detection apparatus of claim 1, characterised in that the focus deviating means (14, 40, 48) includes means (42) for selectively transmitting therethrough the light rays.

3. A focus detection apparatus of claim 1, characterised in that the focus deviating means (14, 40, 48) has a light incidence plane and a light outputting plane both inclined to the axis of the converged light beam.

4. A focus detection apparatus of claim 3, characterised in that the focus deviating means includes a light refracting prism (14).

5. A focus detection apparatus of claim 1, characterised in that the focus deviating means includes a transparent plate (40) with a uniform thickness which is inclined to the axis of the converged light beam.

6. A focus detection apparatus of claim 1, characterised in that the focus deviating means includes a cylindrical lens (48) which is inclined to the axis of the converged light beam.

7. A focus detection apparatus of claim 1, characterised in that the focus deviating means (14, 40, 48) further includes means (58) for selectively reflecting the light rays.

Fig. 1

REPRODUCED
SIGNAL

FOCUS CONTROL SIGNAL or
TRACKING CONTROL SIGNAL

SIGNAL
PROCESSING
CIRCUIT

EP 0 381 443 A2

Fig. 2A

Fig. 2B

Fig. 3A

Fig. 3B

Fig. 3C

Fig. 4

EP 0 381 443 A2

Fig. 5A (1)

Fig. 5B (2)

Fig. 5C (3)

Fig. 5D (4)

Fig. 6

Fig. 7A

Fig. 7B

Fig. 8A

Fig. 8B

Fig. 8C

Fig. 9

Fig. 10

EP 0 381 443 A2

Fig. 11

Fig. 12

Fig. 13